# EUROPEAN PATENT APPLICATION

(11) **EP 2 549 319 A1**
(43) Date of publication of application: **23.01.2013**
(21) Application number: 12160238.7
(22) Date of filing: 19.03.2012
(51) Int. Cl.: G02B 7/00, G02B 5/20, G01N 27/66, H01J 61/40

(54) **UV lamp window with additional UV filter**

(30) Priority: 09.03.2011 GB 201104022
(71) Applicant: Ion Science Limited, Fowlmere Royston, Cambridgeshire SG8 7UJ (GB)
(72) Inventor: Stockdale, Mark, Cambridge, Cambridgeshire CB22 7QD (GB); Powell, Stephen Wood, Cambridge, Cambridgeshire CB22 3DQ (GB)
(74) Representative: Harrison IP Limited

(57) **Abstract**

A demountable filter (1), particularly calcium fluoride, abuts the underlying window of an ultra-violet lamp (60) and is mechanically secured to the window by an 0-ring (2) or other clip. Preferably, the filter (1) engages with a demountable pellet (50) incorporating an electrode contact assembly.

## Description

This invention concerns an effective conjoining of a UV window filter to UV light emitting lamps.

UV lamps comprising gaseous enclosures containing primarily a rare gas such as argon, krypton or xenon and having a window that allows light discharged from these lamps to be emitted are often employed in the detection of photoionisable gases, typically hydrocarbons, at concentrations as low as a few parts per billion in air. Photoionisation detectors include such lamps in an arrangement where the prospectively photo-ionisable gas is admitted into a detection enclosure, which includes the UV light emitting lamp window as one enclosure wall, and an arrangement of electrodes to convert prospective photo-ions into a small current which is amplified and displayed as an ion concentration. The window of the lamp is commonly a disc of less than 1 mm thickness and a few millimetres radius. The window is carefully cut from crystal and is very flat and polished to ensure good light emission.

UV lamps emit light photons of specific photon energy, and a specific chemical compound is only detected by PID if the photon energy approximately equals or exceeds the ionisation potential of that compound. Therefore the relative response of PID to different chemicals depends on the lamp gas. However, it also depends on the window material. By way of example, krypton lamps emit light of 10.0 and 10.6 eV energy. When, as is typical, a magnesium fluoride window is employed in a UV lamp, light of photon energy at or below 10.6 eV is transmitted, and therefore gases of ionisation potential of less than 10.6 eV are broadly detected. If an additional calcium fluoride window is deployed in front of the magnesium fluoride window, the 10.6 eV line is effectively eliminated as calcium fluoride light transmission falls off to a small percentage of the transmission at 10.0 eV between 10.0 eV and about 10.2 eV.

The calcium fluoride window is preferably thin enough not to unnecessarily deplete light of 10.0 eV photon energy, say of 0.5 mm thickness and of similar disc geometry and radius to the magnesium fluoride window. Because krypton lamp manufacture is far advanced over, for example, xenon lamps, the addition of a calcium fluoride window confers enhanced performance over and above what might be gained from simply using a xenon lamp which transmits at around 9.6 eV. By placing a calcium fluoride window over the window of a krypton lamp, one is therefore obtaining powerful light transmission so as to cause a substantial photoionisation of a compound such as benzene, which is ionised by light of energy greater than 9.24 eV, but not the detection of say cyclohexane, with is only ionised by light of 10.13 eV. Thereby the selective detection of the far more toxic benzene is discerned in refinery environments where both such compounds may be present.

It is necessary for the windows, which are both very polished and planar, to abut each other in their use in PID detection, as a gap of more than a few microns will cause considerable light dispersion and act as a prospective source of window fouling. Both aspects may cause the light emanating from the window to be considerably attenuated.

It may appear easier to use a calcium fluoride window in place of magnesium fluoride. However, the thermal expansivity of calcium fluoride does not match that of common glasses, such as soda glass, used for the body of the lamp. Soda glass has a thermal expansivity very close to that of magnesium fluoride and therefore those two materials are commonly used in the manufacture of UK lamps.

It may also appear at first acquaintance quite facile to stick a thin piece of calcium fluoride to magnesium fluoride. For example, why not use an acrylic glue? This sticks quite well to the materials especially if they are coarsened first. The problem is that it also runs freely between the contact surfaces. The UV light is then not transmitted across the interface between the two window materials. So perhaps a thicker adhesive could be applied. The problem is that this may cause the calcium fluoride to distend from the magnesium fluoride. Being very brittle, it then breaks at the slightest provocation.

An alternative approach to the problem is not to try to attach the calcium fluoride to the magnesium fluoride window at all, but rather to include the calcium fluoride as an additional and separate piece, a filter, applied over the top of the magnesium fluoride window which forms part of a UV lamp.

It is not readily apparent that this approach would be satisfactory. Firstly, light from the UV lamp used in photoionisation is attenuated appreciably upon transmission through even a fraction of one millimetre of air. Such air may contain chemicals which may deposit on the window, thereby decreasing transmissivity through it. Therefore, it is desirable for very intimate physical contact to be made between the magnesium fluoride window and calcium fluoride window. Close contact must also be made between the other face of the calcium fluoride window and a planar PID electrode abutting this face, if, again, variance in light transmission across that interface is to be avoided. Such a planar electrode is described and claimed in our USA patent 7821270 dated 26 October 2010 and our corresponding copending patent applications GB 0710287.4 filed 30 May 2007 and EP 08275015.9 filed 12 May 2008.

It is also an advantage for the calcium fluoride window to be very thin, so as to minimise the extent of light absorption and dispersion through it. The material is very brittle, and resulting window may therefore be extremely fragile, and not readily conducive to mechanical insertion between a fixed lamp window and a PID electrode assembly so as to achieve the abutting of surfaces described above

According to one aspect of the present invention, there is provided a demountable filter abutting an underlying window of an ultraviolet lamp and mechanically secured to the window.

In particular and without limitation, there is provided the insertion of a UV filtering window within a photoionisation detection cell wherein one side presses against an affixed UV lamp window forming part of a spring-loaded lamp, and on the other side presses against a slightly flexible planar metal electrode, such as to cause the abutting planar window surfaces to make intimate physical contact so that light transmission through them is substantially invariant.

The invention is particularly beneficial when the filter is calcium fluoride, and especially when the underlying lamp window is magnesium fluoride.

According to another aspect of the present invention, there is provided a photoionisation detector including an ultraviolet filter window inserted within a detection cell, wherein a resilient electrode presses against one face of the filter and the opposed face is pressed against a window of an affixed ultraviolet lamp.

The filter may be located in a mounting in common with that of the underlying lamp window, such as an O-ring or other clip.

Preferably the filter is engageable with a demountable pellet incorporating an electrode contact assembly. In use, a resilient electrode presses against a face of the filter distal from the underlying lamp window.

### Brief Description of the Drawings

The invention will now be described, by way of example, with reference to the accompanying drawings, in which:
Figure 1 is a sectional elevation showing an assembled photoionisation detector capsule including an electrode pellet and an ultra-violet lamp;
Figure 2 is a representation, partially cut away, of a PID sub-assembly comprising a UV filter and its mounting, together with an underlying electrode stack; and
Figure 3 is a chart comparing the response of a photoionisation detector to various commonly occurring organic compounds with various lamps.

### Description of the Preferred Embodiments

The invention provides for crystal faces of similar geometry to be effectively adpressed together upon assembly of readily assembled PID components.

Typically, the two crystals are of disc shape, and a similar diameter.

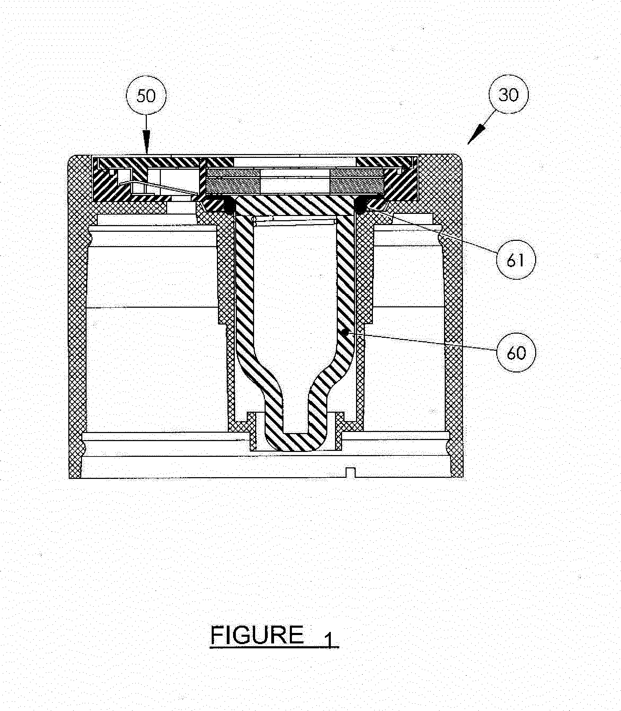

Figure 1 shows an assembled photoionisation detector capsule, indicated generally at 30, including an electrode pellet, indicated generally at 50; an ultra-violet ionisation lamp, indicated generally at 60; and an O-ring seal, indicated generally at 61.

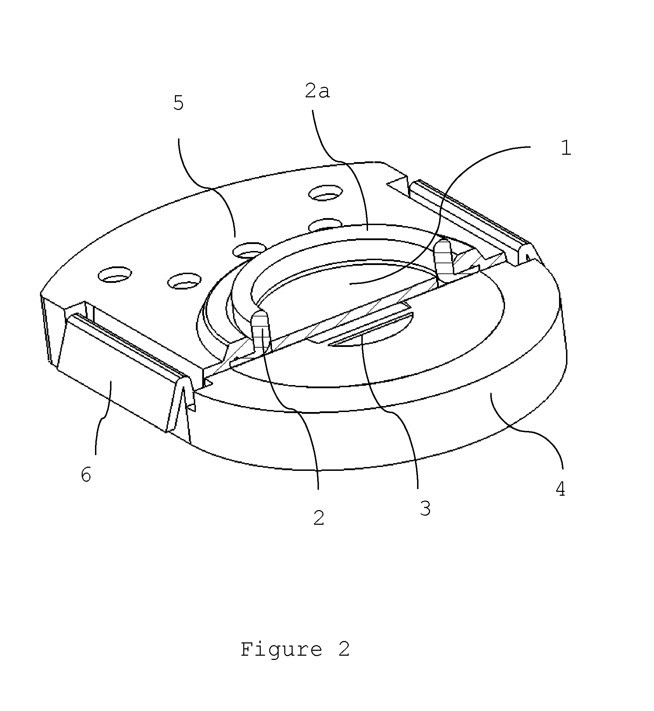

By way of illustration, a pictorial representation of the invention is shown in Figure 2, showing a disc shaped crystal, 1, particularly calcium fluoride. One face of this crystal abuts the lamp window face of a UV light emitting crystal face, which forms part of a UV light emitting lamp enclosure such as 60 of Figure 1 inserted though the O-ring raised section 2a. The other face of the crystal 1 is caused by O-ring 2 to press against a planar metal electrode 3 forming part of a PID electrode stack as described in our US 7821270. The O-ring 2 is preferably fabricated from a perfluorinated elastomer or other material which does not degrade under UV light emitted from the window. It is of such dimensions and geometry as to enable the crystal 1 to be push fitted into it during assembly, without its readily being removed thereafter.

Some aspects of the assembly supplementary to the application are also shown to illustrate the broader use of the assembly. The window is part of a PID sub-assembly body shown in its entirety in Figure 2 contained within a plastic moulding 4. A number of electrodes, not shown, but located below electrode 3, make electrical connection to corresponding metallic contacts, not shown, located behind holes 5 in the housing 4. These holes enable pins which form corresponding members of a PID to make electrical connection to the sub-assembly shown in Figure 2 by means of mechanical engagement of the elongate lugs 6 to the PID, as described in our US 7821270.

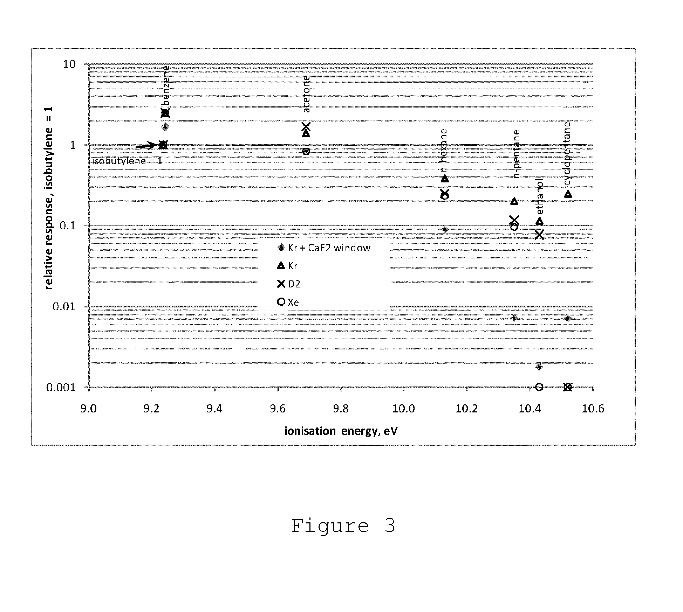

A benefit of the invention is illustrated by reference to Figure 3. This figure shows the response of a photoionisation detector to various commonly occurring organic compounds with various lamps relative to the response obtained from the ubiquitous PID calibration gas, isobutylene. On the x-axis (linear) is plotted the ionisation potential, or IP, of the volatiles. The IP is the minimum photon light energy at which a particular volatile fragments to form charged particles which can be detected in a photoionisation detector. On the y-axis (logarithmetic) is plotted the relative response of a photoionisation detector to the compounds. This was obtained by measuring the current generated within a photoionisation cell on exposure to known small concentrations (typically 100 ppm) of the volatiles. The relative response to isobutylene is presented for a number of standard different light sources, such as krypton, which emits light at 10.0 and 10.6 eV; xenon, which emits light up to about 9.8 eV; and deuterium, up to 10 eV; as well as the light source provided by this invention, namely krypton with an overlying calcium fluoride crystal, denoted 'Kr+CaF₂ window' on the Figure legend. It can be seen that the relative responses obtained on the use of the Kr+CaF₂ window are much reduced for volatiles of ionisation potential exceeding 10.0 eV, and generally as low or lower than those obtained from the Xe or D₂ lamp. The Kr+CaF₂ window is therefore much more discriminating of compounds such as benzene. Considered with the very high output obtained from lamps made according to the invention as compared with conventional Xe and D₂ lamps of the same dimensions, it is considered that the present invention confers much more selective sensitive detection of compounds such as benzene.

The invention has been particularly described wherein the ultraviolet lamp is associated with a photoionisation detection cell. It will be appreciated that other applications of the filter are also beneficial.

## Claims

1. A demountable filter abutting an underlying window of an ultraviolet lamp and mechanically secured to the window.

2. A filter as claimed in Claim 1 consisting of calcium fluoride.

3. A filter as claimed in Claim 2 wherein the underlying lamp window is magnesium fluoride.

4. A filter as claimed in any one of the preceding claims located in a mounting in common with that of the underlying lamp window.

5. A filter as claimed in any one of the preceding claims secured to the underlying lamp window by a clip.

6. A filter as claimed in Claim 5 wherein the clip comprises an O-ring.

7. A filter as claimed in any one of the preceding claims wherein the ultraviolet lamp is associated with a photoionisation detection cell.

8. A filter as claimed in any one of the preceding claims engageable with a demountable pellet incorporating an electrode contact assembly.

9. A filter as claimed in Claims 7 or 8 wherein, in use, a resilient electrode presses against a face of the filter distal from the underlying lamp window.

10. A photoionisation detector including an ultraviolet filter window inserted within a detection cell, wherein a resilient electrode presses against one face of the filter and the opposed face is pressed against a window of an affixed ultraviolet lamp.
